(19) **Europäisches Patentamt**
**European Patent Office**
**Office européen des brevets**

(11) **EP 1 729 407 B1**

(12) **EUROPEAN PATENT SPECIFICATION**

(45) Date of publication and mention
of the grant of the patent:
**12.01.2011 Bulletin 2011/02**

(51) Int Cl.:
***H02P 21/00*** (2006.01)

(21) Application number: **04723720.1**

(86) International application number:
**PCT/JP2004/004297**

(22) Date of filing: **26.03.2004**

(87) International publication number:
**WO 2005/093943 (06.10.2005 Gazette 2005/40)**

(54) **CONTROLLER OF PERMANENT MAGNET SYNCHRONOUS MOTOR**

STEUERUNG EINES PERMANENTMAGNET-SYNCHRONMOTORS

CONTROLEUR DE MOTEUR SYNCHRONE À AIMANT PERMANENT

(84) Designated Contracting States:
**DE**

(43) Date of publication of application:
**06.12.2006 Bulletin 2006/49**

(73) Proprietor: **MITSUBISHI DENKI KABUSHIKI KAISHA**
**Chiyoda-ku, Tokyo 100-8310 (JP)**

(72) Inventor: **SAKAI, Masaya,**
**c/o Mitsubishi Denki K. K.**
**Tokyo 100-8310 (JP)**

(74) Representative: **HOFFMANN EITLE**
**Patent- und Rechtsanwälte**
**Arabellastraße 4**
**81925 München (DE)**

(56) References cited:
**JP-A- 2000 278 982     JP-A- 2001 204 199**
**JP-A- 2004 072 856     US-A- 5 656 911**
**US-A1- 2001 019 251     US-A1- 2003 117 101**
**US-B1- 6 194 865**

**Description**

Technical Field

This invention relates to apparatus for controlling a permanent-magnet-type synchronous motor.

Background Art

In a permanent-magnet-type synchronous motor, a counter electromotive voltage is generated by an induced voltage or armature reaction caused by rotation. There is, therefore, a need to operate the motor so that the counter electromotive force does not exceed the maximum output voltage of an inverter.

In particular, in a high-rotational-speed region in which a rated speed is exceeded, or when a load higher than a rated torque is imposed, it is necessary to prevent the motor terminal voltage from exceeding the maximum output voltage of the inverter. When the direct-current power supply voltage for the inverter is reduced, the maximum output voltage is also reduced. Also in such a case, it is necessary to consider prevention of the motor terminal voltage from exceeding the maximum output voltage of the inverter.

A method of increasing the inverter output voltage is conceivable as a solution to this problem. However, this method entails a possibility of an increase in size of the apparatus. In ordinary cases, therefore, field-weakening control utilizing armature reaction is used.

For example, Japanese Patent Laid-Open No. 2000-278982 relating to conventional field-weakening control on a permanent-magnet-type synchronous motor has been made public. In the specification of this publication is proposed a method in which the value of an inverter direct-current voltage is detected with a voltage sensor and follow-up control of a current in a field direction (d-axis current) is performed according to a d-axis current component command value based on the relationship between a direct-current voltage input to the inverter, the torque of the motor and the rotational speed of the motor so that the induced voltage of the motor does not exceed the inverter direct-current voltage value.

In the conventional apparatus for controlling a permanent-magnet-type synchronous motor, however, the d-axis current command value is computed from the motor rotational speed, a torque current (q-axis current) command and motor constants by using a complicated computation formula including a square root and division when it is necessary to reduce the motor terminal voltage, for example, when the direct-current power supply voltage for the inverter drops or during high-speed operation. Therefore there is a problem that a low-priced processor, e.g., a microcomputer or the like is incapable of such computation and cannot be implemented. Also, since the motor constants change depending on the motor load condition and temperature, an error occurs in the d-axis current command value due to the influence of changes in the motor constants, resulting in failure to suitably perform field-weakening control. There has also been a problem that the d-axis current is caused to flow unnecessarily largely.

JP 2001-204199 A discloses a controller for a permanent magnet type synchronous motor having a d-axis current control which receives the output signal of a voltage detection sensor provided to detect the input voltage to the motor. Thereby, the input voltage to the motor is sensed and included in the overall control operation. In view of the high voltages typically supplied to a permanent magnet type synchronous motor, the voltage detection increases the overall costs of the controller.

In view of the above-described problems, an object of the present invention is to obtain apparatus for controlling a permanent-magnet-type synchronous motor having a simple configuration without using a square root or a complicated computation formula and capable of limiting the terminal voltage on the motor with accuracy even with respect to changes in motor constants.

Disclosure of the Invention

In this invention, the terminal voltage on a permanent-magnet-type synchronous motor is limited by causing a negative current along the d-axis such that the maximum output voltage of an inverter does not exceed the motor terminal voltage. According to this invention, the magnitude of the d-axis current component is adjusted by comparing a voltage command value input to the inverter and a terminal voltage upper limit value (threshold value) set on the basis of the maximum output voltage of the inverter, changing the d-axis current component in such a direction that the d-axis current component is increased in the negative direction when the voltage command value exceeds the terminal voltage upper limit value, and changing the d-axis current component in such a direction that the d-axis current component is reduced in the negative direction when the voltage command value is equal to or lower than the terminal voltage upper limit value. No positive d-axis current is caused to flow. The magnitude of the d-axis current is adjusted by controlling the change in the d-axis current command value in this manner. Control of the voltage command value according to the threshold value is thereby performed. Thus, the motor is controlled so that the motor terminal voltage does not exceed the maximum output voltage of the inverter.

Brief Description of the Drawings

Figure 1 is a block diagram showing the configuration of an apparatus for controlling a permanent-magnet-type synchronous motor in first embodiment of this invention;
Figure 2 is a block diagram showing an example of the configuration of a d-axis current commander used in the apparatus for controlling a permanent-magnet-type synchronous motor in first embodiment of this invention;

Figure 3 is a diagram showing characteristics of the apparatus for controlling a permanent-magnet-type synchronous motor in first embodiment of this invention;

Figure 4 is a diagram showing characteristics of the apparatus for controlling a permanent-magnet-type synchronous motor in first embodiment of this invention; and

Figure 5 is a block diagram showing an example of the configuration of a d-axis current commander used in an apparatus for controlling a permanent-magnet-type synchronous motor in second embodiment of this invention.

Best Mode for Carrying Out the Invention

This invention will be described in detail with reference to the accompanying drawings.

First embodiment

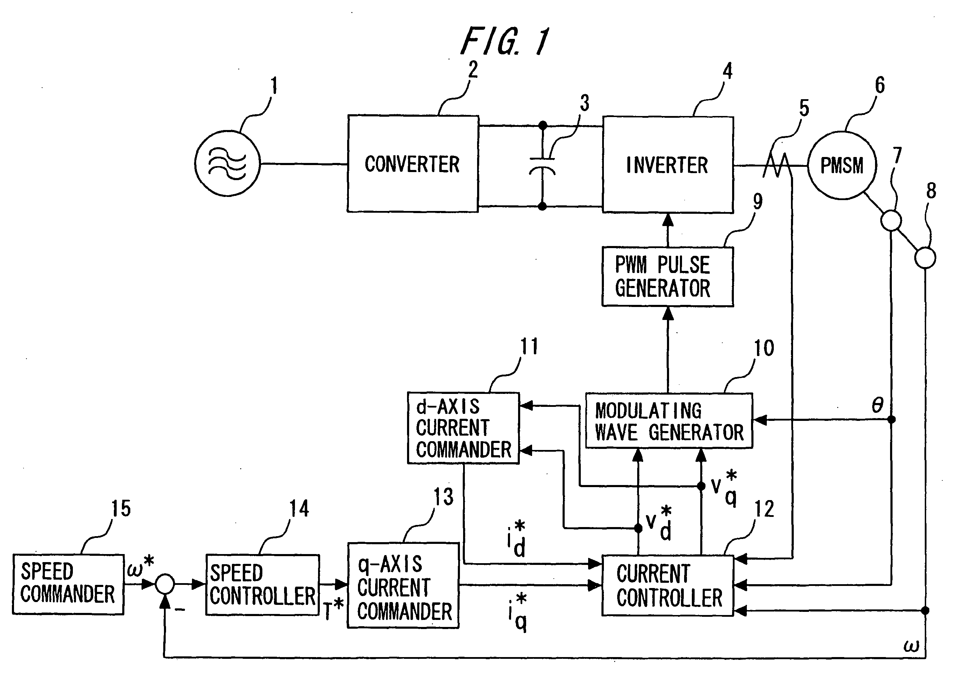

Figure 1 is a block diagram showing an apparatus for controlling a permanent-magnet-type synchronous motor in first embodiment of this invention. Referring to Figure 1, the apparatus for controlling a permanent-magnet-type synchronous motor is constituted by an alternating-current power supply 1, a converter 2, a smoothing capacitor 3, an inverter 4, a current detector 5, a permanent-magnet-type synchronous motor 6, a motor position detector 7, a motor speed detector 8, a PWM pulse generator 9, a modulating wave generator 10, a current controller 12, a q-axis current commander 13, a speed controller 14, and a speed commander 15. The alternating power supply 1 is input to the converter 2. The converter 2 outputs a direct-current voltage, which is smoothed by the smoothing capacitor 3 and input to the inverter 4. The inverter 4 performs switching using the PWM pulse generator 9 and thereby outputs a variable-voltage variable-frequency alternating current voltage to drive the permanent-magnet-type synchronous motor 6.

The motor position detector 7 and the motor speed detector 8 respectively detect a magnetic pole position θ and a motor speed ω of the permanent-magnet-type synchronous motor 6, which are used for control of drive of the motor. The speed commander 15 generates a speed command signal ω*, and the speed controller 14 outputs a torque command value T* for enabling the motor speed ω to follow the speed command signal ω*. The q-axis current commander 13 converts the torque command value T* into a command value iq* for a current component (q-axis current) corresponding to the generated torque of the motor. The current detector 5 detects the motor current flowing through the permanent-magnet-type synchronous motor 6.

The current controller 12 decomposes the motor current into d-axis and q-axis current components by using the magnetic pole position θ and performs control such that these components respectively follow the d-axis current command value id* generated by a d-axis current commander 11 and the q-axis current command value iq*. At this time, the current controller 12 outputs vd* and vq*, which are voltage command values obtained by converting onto the d-q axis a voltage command value for the inverter 4 that applies the voltage to the motor terminal. The d-axis current commander 11 are supplied with the voltage command values vd* and vq*, and outputs a d-axis current command value id*. This operation will be described below in detail. The modulating wave generator 10 converts the voltage command values vd* and vq* from the d-q axis into voltage command values for three-phase alternating-current components by using the magnetic pole position θ and outputs these voltage values to the PWM pulse generator 9. The PWM pulse generator 9 converts the voltage command values for the three-phase alternating-current components into a PWM signal for driving the inverter 4 and outputs the signal to the inverter 4.

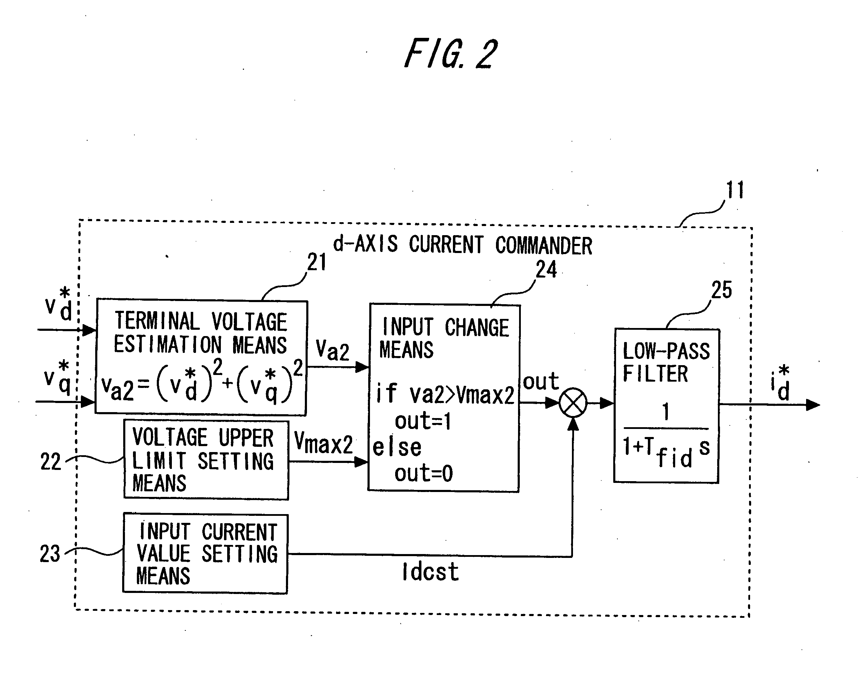

Figure 2 shows an example of the configuration of the d-axis current commander used in the apparatus for controlling the permanent-magnet-type synchronous motor in accordance with this invention. A method for adjustment of the magnitude of the d-axis current value using a low-pass filter will be described with respect to first embodiment.

The d-axis current commander 11 is constituted by a terminal voltage estimation means 21 which estimates the terminal voltage of the motor, a power supply voltage setting means 22 which sets an upper limit value of the output voltage of the inverter 4, an input current value setting means 23 which sets the d-axis current, an input change means 24 which performs field-weakening control by changing an input to a low-pass filter, and a low-pass filter 25. The d-axis current commander 11 outputs a d-axis current command such that the terminal voltage of the permanent-magnet-type synchronous motor 6 does not exceed the maximum output voltage of the inverter 4 computed from an inverter 4 direct-current voltage set value. The operation thereof will be described below.

The terminal voltage estimation means 21 estimates the terminal voltage of the permanent-magnet-type synchronous motor 6 from the voltage command values vd* and vq* output from the current controller 12. For example, a terminal voltage va2 expressed in equation 1 can be estimated.

$$(Equation\ 1)$$
$$v_{a2} = v_d^{*2} + v_q^{*2}$$

The voltage upper limit setting means 22 sets a terminal voltage upper limit value (threshold value) Vmax2 by converting the terminal voltage upper limit of the permanent-magnet-type synchronous motor 6 in correspondence with equation 1 on the basis of the maximum output voltage value of the inverter 4. In the case of use of equation 1, the interline voltage amplitude value of the motor corresponds to $\sqrt{2v_{a2}}$. Accordingly, the setting may be such that this upper limit value is the maximum output voltage of the inverter 4. Accordingly, if the maximum output voltage of the inverter 4 is Vdc, setting to the value computed as shown by equation 2 may be made.

(Equation 2)

$$V_{\max 2} = V_{dc}^2 / 2$$

By this setting, the terminal voltage of the permanent-magnet-type synchronous motor 6 is limited so as not to exceed the maximum output voltage of the inverter 4. Setting to a value lower than that expressed by equation 2 may be made to provide a voltage margin. Equations 1 and 2 may be replaced with

$$v_{a2} = \sqrt{v_d^{\bullet 2} + v_q^{\bullet 2}}, \qquad V_{\max 2} = V_{dc}/\sqrt{2}. \text{ However,}$$

since the estimated terminal voltage va2 is computed online, it is desirable to use equations 1 and 2 which are computed by a smaller amount of computation.

Subsequently, the input change means 24 that performs field-weakening control compares the terminal voltage va2 estimated by the terminal voltage estimation means 21 and the terminal voltage upper limit value (threshold value) Vmax2 set by the voltage upper limit setting means 22. If va2 > Vmax2, that is, the motor terminal voltage exceeds the maximum output voltage of the inverter, the input change means 24 determines that it is necessary to increase the d-axis current value in the negative direction. At this time, in this embodiment, the input change means 24 outputs 1. If va2 = Vmax2 or va2 < Vmax2, the input change means 24 determines that it is necessary to reduce the d-axis current value in the negative direction and outputs zero.

The input current value setting means 23 sets a temporary input value Idcst for the d-axis current command. The temporary input value Idcst is a negative constant value. For example, its absolute value is set as the maximum of the acceptable d-axis current value.

To the low-pass filter 25, a value obtained by multiplying together the value output from the input change means 24 that performs field-weakening control and the value output from the input current value setting means 23 is inputted. That is, Idcst is input if va2 > Vmax2, and zero is input if va2 = Vmax2 or va2 < Vmax2. The input signal is in pulse form.

The low-pass filter 25 is a primary filter having a cutoff frequency as Tfid in Embodiment 1. If Tfid is increased, the band is narrowed and the output signal response is therefore made slower, but the waveform becomes smoother. Conversely, if Tfid is reduced, the band is broadened and the output signal response is therefore made faster, but the influence of the input pulse signal on the waveform is liable to remain. The above-described low-pass filter 25 is expressed by equation 3, in which 's' is Laplacian.

(Equation 3)

$$F(s) = \frac{1}{1 + T_{fid}s}$$

The above-described low-pass filter 25 is supplied with signal in pulse form and outputs the input signal after smoothing the input signal. The d-axis current command value id* is therefore output as a signal smooth in the region from Idcst to zero.

By the above-described operation, the d-axis current command value id* is increased in the negative direction if va2 > Vmax2, and is reduced in the negative direction if va2 = Vmax2 or va2 < Vmax2. Consequently, control is performed so that the voltage command value coincides with the terminal voltage upper limit value set on the basis of the maximum output voltage of the inverter 4 (va2 = Vmax2) when field-weakening control is performed. Since the voltage command value is generally equal to the motor terminal voltage, control is performed so that the motor terminal voltage coincides with the terminal voltage upper limit value.

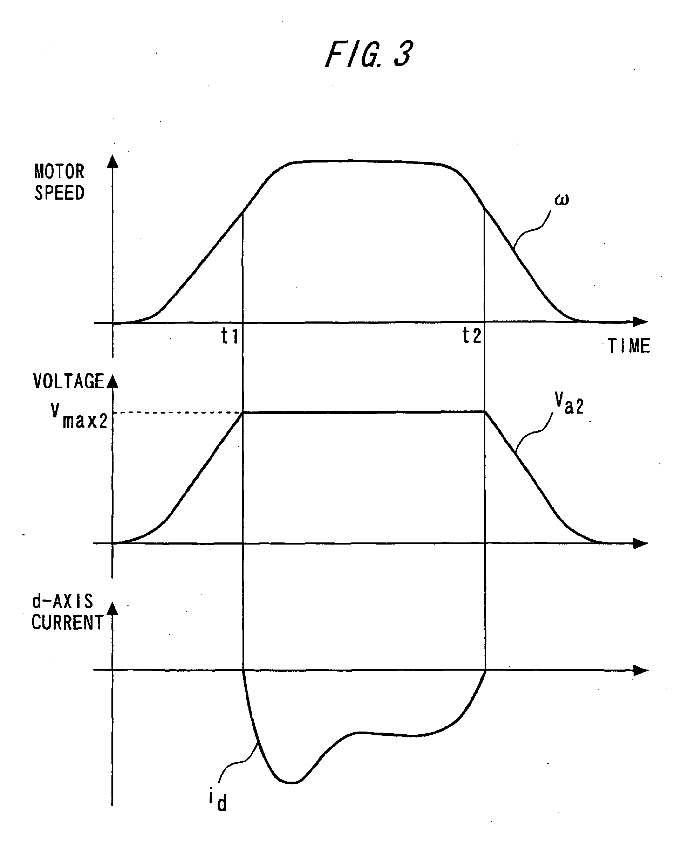

Figure 3 shows the field-weakening control operation according to first embodiment. The motor speed is shown in the top section; the motor voltage command value in the middle section; and the d-axis current in the bottom section. The motor speed ω has a form: acceleration-constant speed-deceleration and stoppage. For example, such a form is adopted in the case of an elevator or the like. The estimated terminal voltage value va2 becomes equal to the terminal voltage upper limit value Vmax2 at time t1. At this time, the d-axis current is controlled so that va2 does not exceed Vmax2. At time t2, the rotational speed of the motor is decelerated and the motor terminal voltage becomes Vmax2 or lower. At this time, therefore, the d-axis current becomes zero.

According to this invention, as described above, determination is made on the basis of the magnitude of the voltage command value as to whether or not field-weakening control should be performed, and changes in the d-axis current command value is determined such as to be smoothed into a signal in pulse form having a constant value and a zero value by means of the low-pass filter 25. Thus, the d-axis current command value can be computed in a simple way without using any motor constant and the apparatus can be implemented by using a low-priced processor.

Since no motor constant is used for computation of the d-axis current command value, field-weakening control is performed by adjusting the d-axis current to a suitable value without any influence such as the influence of a change in a motor constant due to a change in the condition of the load on the motor or a change in temperature. Therefore, a phenomenon in which an error in d-axis current occurs due to a change in a motor constant to allow the motor terminal voltage to exceed the maximum output voltage of the inverter 4 and to cause failure to perform the operation, a phenomenon in which the d-axis current is caused to flow unnecessarily largely to reduce the motor efficiency, or the like can be prevented.

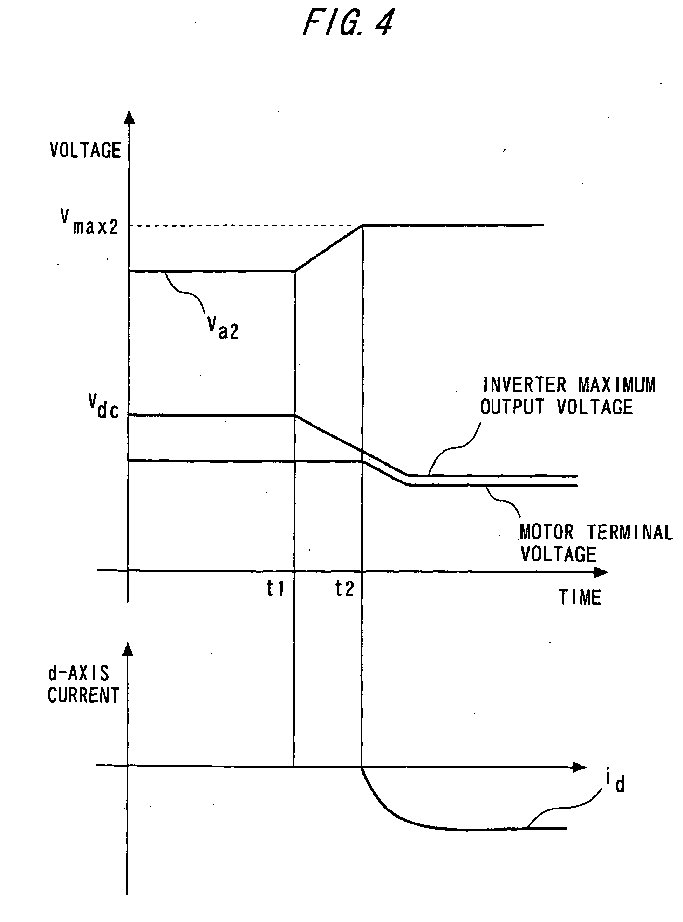

Further, according to this invention, even in a case where the direct-current power supply voltage for the inverter 4 (equal to the voltage across the smoothing capacitor 3) becomes lower, for example, when the voltage of the alternating-current power supply 1 is reduced, and where the maximum output voltage of the inverter 4 becomes lower with the reduction in power supply voltage, the effect of suitably performing field-weakening control by preventing the motor terminal voltage from exceeding the maximum output voltage of the inverter 4 can be achieved. A description will be made of this with reference to Figure 4.

Referring to Figure 4, it is assumed that the direct-current power supply voltage for the inverter 4 becomes lower at time t1. At this time, the output voltage of the inverter 4 is reduced even if the voltage command value is not changed. Therefore, control is performed by means of the current controller 12 to maintain the output voltage of the inverter 4. The voltage command value is thereby increased. That is, the voltage command value becomes higher than the actual motor terminal voltage. Accordingly, when the estimated terminal voltage va2 rises to reach the threshold value Vmax2 (time t2), field-weakening control is performed by causing the d-axis current to flow as described above, i.e., control to reduce the motor terminal voltage so that the motor terminal voltage does not exceed the maximum output voltage of the inverter 4. As described above, when the voltage of the alternating-current power supply 1 is reduced, a transition to field-weakening control is made according to the amount of reduction in the power supply voltage in a state where the motor terminal voltage is lower than that in an ordinary situation where the voltage is not reduced, thus performing control to prevent the reduced maximum output voltage of the inverter from being exceeded.

Conversely, when the direct-current power supply voltage for the inverter 4 is increased by a regeneration operation, and when the maximum output voltage of the inverter 4 increases with the increase in the direct-current power supply voltage, the output voltage of the inverter 4 increases according to the increase in the voltage across the smoothing capacitor 3 even if the voltage command value is not changed. Accordingly, the voltage command value is reduced by the current controller 12 until the voltage command value becomes lower than the actual motor terminal voltage. Thus, reducing the motor efficiency by causing an unnecessarily high d-axis current for a transition to field-weakening control in a state where the motor terminal voltage is high, in comparison with an ordinary case where the voltage across the smoothing capacitor 3 is not increased, is avoided.

A voltage sensor for detecting the direct-current power supply voltage for the inverter 4 may be provided and Vmax2 may be updated at all times by equation 2 using the detected voltage value as Vdc. In this way, the maximum output voltage of the inverter 4 can be evaluated more accurately to perform field-weakening control with higher efficiency. Also, the motor terminal voltage may be measured with a voltage sensor or the like and va2 may be obtained by the measured value. In this way, the motor terminal voltage can be detected with accuracy, and the need for the terminal voltage estimation means 21 can be eliminated.

While the low-pass filter 25 in first embodiment is a primary filter, it may alternatively be a higher-order filter, e.g., a secondary filter.

Second embodiment

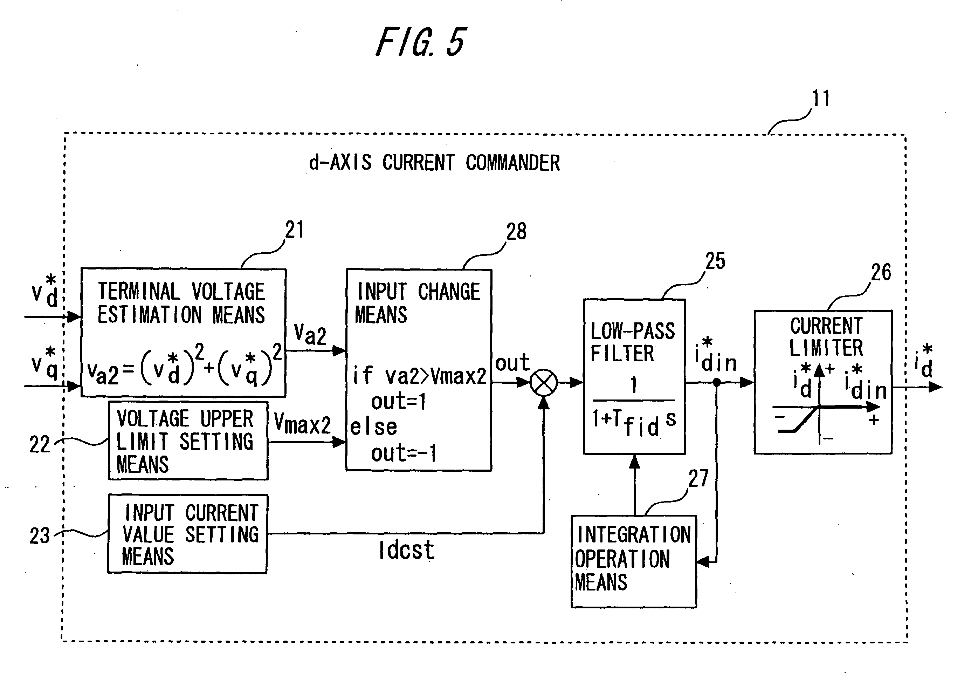

While the d-axis current commander 11 in first embodiment described above is arranged as shown in Figure 2, it may alternatively be arranged as shown in Figure 5. The apparatus arranged in such a manner is also capable of performing the same operation.

Figure 5 shows an example of the configuration of a d-axis current commander used in an apparatus for controlling a permanent-magnet-type synchronous motor in second embodiment of this invention.

In second embodiment, there are newly added a current limiter 26, an integration operation means 27 and an input change means 28 which is used in place of the input change means 24 for performing field-weakening control, and which performs field-weakening control including a different in processing detail. Components indicated in Figure 5 by the same reference characters as those in Figure 2 perform the same operations as the corresponding components of first embodiment.

The input change means 28 for performing different field-weakening control compares the terminal voltage va2 estimated by the terminal voltage estimation means 21 and the terminal voltage upper limit value Vmax2 set by the voltage upper limit setting means 22. If va2 > Vmax2, that is, the motor terminal voltage exceeds the maximum output voltage of the inverter, the input change means 28 determines that it is necessary to increase the d-axis current value in the negative direction. At this time, in this embodiment, the input change means 28 outputs 1. If va2 = Vmax2 or va2 < Vmax2, the input change means 28 determines that it is necessary to reduce the d-axis current value in the negative direction and outputs -1. Thus, in contrast with first embodiment, -Idcst is input to the low-pass filter 25 in the case of reducing the d-axis current in the negative direction. The response speed in the case of reducing the d-axis current in the negative direction is thereby increased to improve the controllability.

The current limiter 26 limits a signal idin* output from the low-pass filter 25 between upper and lower limit values set in advance and outputs id*. For example, zero is designated as the upper limit and -Idmax (Idmax > 0) is designated as the lower limit. The current limiter 26 outputs id* = 0 if idin* > 0, outputs id* = idin* if idin* = 0 or -Idmax < idin* < 0, and outputs id* = -Idmax if id* = -Idmax or id* < -Idmax. In this way, output of a positive d-axis current command value is prevented and the d-axis current can be limited within a predetermined range.

The integration operation means 27 is a means for operating the integration operation of an integrator constituting the low-pass filter 25. The integration operation means 27 operates so as to hold the output of the integrator when idin* out of the range set in the current limiter 26 is output and restart the integration operation of the integrator when idin* again falls into the range of the current limiter 26. In this way, idin* is held in the limiter set value even when idin* out of the range set in the current limiter 26 is output, thereby increasing the response speed when id* is returned from the limiter set value into the range inside the limiter set value.

According to this invention, as described above, the value input to the low-pass filter 25 is set to a positive value when the d-axis current command value is reduced in the negative direction, and the integration operation in the low-pass filter 25 is performed when the d-axis current command value is out of the set range of the current limiter. The speed of response of the d-axis current command value is thereby increased to further improve the controllability.

While in second embodiment the value Idcst input to the low-pass filter 25 is a fixed value, it may be made variable according to the value of the d-axis current command value. If it is variable, adjustment of the amount of change in the output from the low-pass filter 25 and, hence, adjustment of the amount of change in the d-axis current command value can be performed. For example, Idcst is reduced when the d-axis current command value is small, and is increased when the d-axis current command value is large, thereby making the amount of change in the d-axis current command value substantially constant.

Further, Idcst may be made variable according to the motor load condition and the motor rotational speed. In this way, the amount of change in the output from the low-pass filter, i.e., the amount of change in the d-axis current command value, can be adjusted according to the motor load condition and rotational speed. The amount of change in the d-axis current command value can be increased by increasing Idcst, and can be reduced by reducing Idcst. In particular, in a case where the motor terminal voltage rises largely, for example, when a load is abruptly applied or when the rotational speed of the motor is increased, Idcst is set to a larger value to increase the amount of change in the d-axis current command value, thereby enabling the motor terminal voltage to be immediately limited. This is effective in a motor control apparatus in which a motor speed pattern or the condition of a load on a motor is fixed to some degree, for example, in the case of an elevator in particular. In an elevator or the like, both the load and speed are maximized at about a transition from acceleration to constant-speed movement during power running operation and the rate of increase in motor terminal voltage and the terminal voltage are correspondingly maximized. At this time, the motor terminal voltage can be immediately limited if Idcst is set to a larger value. The magnitude of Idcst may be determined by a function using the load condition and the motor rotational speed as variables, or may be set in a table formed according to the load condition and the motor rotational speed. For the motor load condition, the q-axis current value or the q-axis current command value can be used as an index. Similarly, determination of the cutoff frequency Tfid of the low-pass filter may be variable according to the motor load condition or the rotational speed. The amount of change in the d-axis current command value can also be adjusted through this. The amount of change in the d-axis current command value can be increased by increasing the cutoff frequency of the low-pass filter. The amount of change in the d-axis current command value can be reduced by reducing the cutoff frequency of the low-pass filter. In this way, an effect similar to that in the case of making Idcst variable as described above can be obtained.

While in this embodiment the terminal voltage upper limit value Vmax2 is fixed, it may be made variable according to the motor load condition and the motor rotational speed. For example, Vmax2 in power running operation is set to a lower value because the direct-current power supply voltage (the voltage across the smoothing capacitor) for the inverter is reduced. Conversely, Vmax2 in regeneration operation is set to a larger value because the direct-current power supply voltage for the inverter is increased. This setting enables changeover to field-weakening control by more suitable timing. In an elevator or the like, the motor load is large during acceleration and constant-speed traveling in power running operation and the direct-current power supply voltage for the inverter is therefore reduced. In such a case, Vmax2 may be set to a lower value. The direct-current power supply voltage is increased during acceleration or constant-speed traveling in regeneration operation. In such a case, Vmax2 may be set to a larger value. The travel speed can be detected by measuring the rotational speed of the motor and each of power running operation and regeneration conditions can be identified by measuring the motor rotational direction and the motor load condition (q-axis current or q-axis current command value). Vmax2 may be determined by a function using the load condition and the motor rotational speed as variables or may be set in a table formed according to the load condition and the motor rotational speed.

Industrial Applicability

According to this invention, as described above, the magnitude of the value of the voltage command to the inverter and the terminal voltage upper limit value (threshold value) set on the basis of the maximum output voltage of the inverter are compared with each other; the d-axis current command value is increased in the negative direction when the voltage command value exceeds the terminal voltage upper limit value; and the d-axis current command value is reduced in the negative direction when the voltage command value is equal to or lower than the terminal voltage upper limit value. A motor control apparatus can therefore be obtained which is of a simple configuration without using a square root or a complicated computation formula, and which is capable of limiting the motor terminal voltage with accuracy even with respect to changes in motor constants. This apparatus is particularly effective when used for an elevator or the like in which the pattern of the speed of a motor and the condition of a load on the motor are determined to some degree.

**Claims**

1. Control apparatus for a permanent-magnet-type synchronous motor in which the permanent-magnet-type synchronous motor (6) is driven by an inverter (4) having a direct-current voltage input thereto and capable of producing a variable-voltage variable-frequency output, and in which field-weakening control is performed by causing a d-axis current component (Id) to flow in the same direction as that of a magnetic field of the motor (6), the control apparatus being **characterized by** comprising a d-axis current commander (11) which limits the increase in the terminal voltage on the motor (6) by comparing the magnitude of the value of a voltage command (Vd* Vq*) to the inverter (4) and a terminal voltage upper limit value (Vmax2) set on the basis of the maximum output voltage of the inverter (4), increasing a d-axis current command value (Id*) in the negative direction when the voltage command value (Vd*, Vq*) exceeds the terminal voltage upper limit value (Vmax2), and reducing the d-axis current command value (Id*) in the negative direction when the voltage command value (Vd*, Vq*) is equal to or lower than the terminal voltage upper limit value (Vmax2).

2. The control apparatus for a permanent-magnet-type synchronous motor according to claim 1, **characterized in that** the d-axis current commander (11) comprises:

a terminal voltage estimation means (21) which estimates the terminal voltage of the motor on the basis of the voltage command values (Vd*, Vq*) to the inverter (4) ;
a voltage upper limit setting means (22) which sets the terminal voltage upper limit value (Vmax2) of the output voltage of the inverter (4) ;
an input current value setting means (23) which sets a temporary input value (Idest) for the d-axis current command (Id*);
a low-pass filter (25); and
an input change means (24) which performs field-weakening control by changing an input to the low-pass filter (25).

3. The control apparatus for a permanent-magnet-type synchronous motor according to claim 2, **characterized in that** the d-axis current commander (11) limits the increase in the terminal voltage on the motor (6) by setting an input to the low-pass filter (25) to a negative constant value when the voltage command value to the inverter (4) exceeds the terminal voltage upper limit value set on the basis of the maximum output voltage of the inverter (4), setting the input to zero when the voltage command value to the inverter (4) is equal to or lower than the terminal voltage upper limit value, and using an output from the low-pass filter (25) as a d-axis current command value.

4. The control apparatus for a permanent-magnet-type synchronous motor according to claim 1, **characterized in that** the d-axis current commander (11) comprises:

a terminal voltage estimation means (21) which estimates the terminal voltage of the motor on the basis of the voltage command values (Vd*, Vq*) to the inverter (4);
a voltage upper limit setting means (22) which sets the terminal voltage upper limit value (Vmax2) of the output voltage of the inverter (4);
an input current value setting means (23) which sets a temoporary input value (Idest) for the d-axis current command (Id*);
a low-pass filter (25); and
an input change means (28) which performs field-weakening control by changing an input to the low-pass filter (25) ;
a current limiter (26) which limits the current command value; and
an integration operation means (27) for operating integration in the low-pass filter (25).

5. The control apparatus for a permanent-magnet-type synchronous motor according to claim 4, **characterized in that** the d-axis current commander (11) sets an input to the low-pass filter (25) to a negative constant value when the voltage command value to the inverter (4) exceeds the terminal voltage upper limit value (Vmax2) set on the basis of the maximum output voltage of the inverter (4), sets the input to a positive constant value when the voltage command value (Vd*, Vq*) to the inverter (4) is equal to or lower than the terminal voltage upper limit value (Vmax2), uses, as a d-axis current command value (Vd*), a value obtained by limiting an output from the low-pass filter (25) by means of the current limiter (26), and inhibits the integration operation of the low-pass filter (25) when the output from the low-pass filter (25) is out of a range in which the output is limited by the current limiter (26).

6. The control apparatus for a permanent-magnet-type synchronous motor according to claim 3 or 5, **characterized in that** the value of the input to the low-pass filter (25) and the cutoff frequency of the low-pass filter (25) are made variable according to the d-axis current command value (Vd*), the condition of a load on the motor (6) and the rotational speed of the motor (6).

7. The control apparatus for a permanent-magnet-type synchronous motor according to any one of claims 1 to 6, **characterized in that** the terminal voltage upper limit value (Vmax2) set on the basis of the maximum output voltage of the inverter (4) is made variable according to the condition of a load on the motor (6) and the rotational speed of the motor (6).

**Patentansprüche**

1. Steuervorrichtung für einen Permanentmagnettyp-Synchronmotor, bei der der Permanentmagnettyp-Synchronmotor (6) durch einen Inverter (4) angesteuert wird, in den eine Gleichstromspannung eingegeben wird, und durch den eine Ausgabe mit variabler Spannung und variabler Frequenz erzeugbar ist, und bei der eine Feld schwächende Steuerung durchgeführt wird, bei der bewirkt wird, dass eine d-Achsen Stromkomponente (id) in der gleichen Richtung wie die eines Magnetfeldes des Motors (6) fließt, wobei die Steuervorrichtung **dadurch gekennzeichnet ist, dass** sie umfasst:

   eine d-Achsen Strom-Anweisungseinheit (11) zum Begrenzen des Anstiegs der Anschlussspannung des Motors (6) durch einen Vergleich der Größe des Werts einer Spannungsanweisung (Vd*,Vq*) an den Inverter (4) und
   einem oberen Grenzwert der Anschlussspannung (Vmax2), der auf der Grundlage der maximalen Ausgabespannung des Inverters (4) eingestellt ist, Erhöhen eines d-Achsen Stromanweisungswerts (id*) in der negativen Richtung, wenn der Spannungsanweisungswert (Vd*,Vq*) den oberen Grenzwert der Anschlussspannung (Vmax2) überschreitet, und Reduzieren des d-Achsen Stromanweisungswertes (id*) in der negativen Richtung, wenn der Spannungsanweisungswert (Vd*,Vq*) gleich oder kleiner als der obere Grenzwert der Anschlussspannung (Vmax2) ist.

2. Steuervorrichtung für einen Permanentmagnettyp-Synchronmotor nach Anspruch 1, **dadurch gekennzeichnet, dass** die d-Achsen Strom-Anweisungseinheit (11) umfasst:

   ein Anschlussspannungs-Schätzmittel (21) zum Schätzen der Anschlussspannung des Motors auf Grundlage der Spannungsanweisungswerte (Vd*,Vq*) für den Inverter (4);
   ein Spannungsobergrenzen-Einstellmittel (22) zum Einstellen des oberen Grenzwerts der Anschlussspannung (Vmax2) der Ausgabespannung des Inverters (4);
   ein Eingabestromwert-Einstellmittel (23) zum Einstellen eines temporären Eingabewerts (Idcst) für die d-Achsen Stromanweisung (id*);
   einen Tiefpassfilter (25); und
   ein Eingabeänderungsmittel (24) zum Durchführen einer Feld-schwächenden Steuerung durch Ändern einer Eingabe in den Tiefpassfilter (25).

3. Steuervorrichtung für einen Permanentmagnettyp-Synchronmotor nach Anspruch 2, **dadurch gekennzeichnet, dass** die d-Achsen Strom-Anweisungseinheit (11) den Anstieg der Anschlussspannung des Motors (6) begrenzt, durch Einstellen einer Eingabe an den Tiefpassfilter (25) auf einen negativen konstanten Wert, wenn der Spannungsanweisungswert für den Inverter (4) den oberen Grenzwert der Anschlussspannung überschreitet, der auf der Grundlage der maximalen Ausgabespannung des Inverters (4) eingestellt ist, durch Einstellen der Eingabe auf Null, wenn der Spannungsanweisungswert für den Inverter (4) gleich oder kleiner als der obere Grenzwert der Anschlussspannung ist, und durch Verwenden einer Ausgabe von dem Tiefpassfilter (25) als ein d-Achsen Stromanweisungswert.

4. Steuervorrichtung für einen Permanentmagnettyp-Synchronmotor nach Anspruch 1, **dadurch gekennzeichnet, dass** die d-Achsen Strom-Anweisungseinheit (11) umfasst:

   ein Anschlussspannungs-Schätzmittel (21) zum Schätzen der Anschlussspannung des Motors auf der Grundlage der Spannungsanweisungswerte (Vd*,Vq*) für den Inverter (4);

ein Spannungsobergrenzen-Einstellmittel (22) zum Einstellen des oberen Grenzwerts der Anschlussspannung (Vmax2) der Ausgabespannung des Inverters (4);

ein Eingabestromwert-Einstellmittel (23) zum Einstellen eines temporären Eingabewerts (Idcst) für die d-Achsen Stromanweisung (id*);

einen Tiefpassfilter (25); und

eine Strombegrenzungseinheit (26) zum Begrenzen des Stromanweisungswertes; und

ein Integrationsbetriebsmittel (27) zum Betreiben einer Integration in dem Tiefpassfilter (25).

5. Steuervorrichtung für einen Permanentmagnettyp-Synchronmotor nach Anspruch 4, **dadurch gekennzeichnet, dass** die d-Achsen Strom-Anweisungseinheit (11) eine Eingabe in den Tiefpassfilter (25) auf einen negativen konstanten Wert einstellt, wenn der Spannungsanweisungswert für den Inverter (4) den oberen Grenzwerts der Anschlussspannung (Vmax2) überschreitet, der auf der Grundlage der maximalen Ausgabenspannung des Inverter (4) eingestellt ist, die Eingabe auf einen positiven konstanten Wert einstellt, wenn der Spannungsanweisungswert (Vd*,Vq*) für den Inverter (4) gleich oder kleiner als der obere Grenzwert der Anschlussspannung (Vmax2) ist, als einen d-Achsen Stromanweisungswert (Vd*) einen Wert verwendet, der durch Begrenzen einer Ausgabe von dem Tiefpassfilter (25) über die Strombegrenzungseinheit (26) erhalten wird, und den Integrationsbetrieb des Tiefpassfilters (25) unterdrückt, wenn die Ausgabe von dem Tiefpassfilter (25) außerhalb eines Bereiches ist, in dem die Ausgabe durch die Strombegrenzungseinheit (26) begrenzt ist.

6. Steuervorrichtung für einen Permanentmagnettyp-Synchronmotor nach Anspruch 3 oder 5, **dadurch gekennzeichnet, dass** der Wert der Eingabe in den Tiefpassfilter (25) und die Abschneidefrequenz des Tiefpassfilters (25) gemäss dem d-Achsen Stromanweisungswert (Vd*), dem Zustand einer Last an dem Motor (6) und der Rotationsgeschwindigkeit des Motors (6) variabel sind.

7. Steuervorrichtung für einen Permanentmagnettyp-Synchronmotor nach irgendeinem der Ansprüche 1 bis 6, **dadurch gekennzeichnet, dass** der obere Grenzwert der Anschlussspannung (Vmax2), der auf der Grundlage der maximalen Ausgabespannung des Inverters (4) eingestellt ist, gemäss dem Zustand einer Last an dem Motor (6) und der Rotationsgeschwindigkeit des Motors (6) variabel ist.

## Revendications

1. Appareil de commande pour un moteur synchrone de type à aimant permanent dans lequel le moteur synchrone de type à aimant permanent (6) est entraîné par un inverseur (4) ayant une entrée de tension en courant continu dans ce dernier et susceptible de produire une sortie à fréquence variable et tension variable, et dans lequel une commande à affaiblissement de champ est effectuée en amenant une composante de courant d'axe d (Id) à s'écouler dans la même direction que celle d'un champ magnétique du moteur (6), l'appareil de commande étant **caractérisé en ce qu'**il comprend un dispositif de commande de courant d'axe d (11) qui limite l'augmentation de la tension terminale sur le moteur (6) en comparant l'amplitude de la valeur d'une commande de tension (Vd*, Vq*) pour l'inverseur (4) et une valeur de limite supérieure de tension terminale (Vmax$_2$) fixée sur la base de la tension de sortie maximale de l'inverseur (4), en augmentant une valeur de commande de courant d'axe d (Id*) dans la direction négative quand la valeur de commande de tension (Vd*, Vq*) dépasse la valeur de limite supérieure de tension terminale (Vmax$_2$), et en réduisant la valeur de commande de courant d'axe d (Id*) dans la direction négative quand la valeur de commande de tension (Vd*, Vq*) est égale ou inférieure à la valeur de limite supérieure de tension terminale (Vmax$_2$).

2. Appareil de commande pour un moteur synchrone de type à aimant permanent selon la revendication 1, **caractérisé en ce que** le dispositif de commande de courant d'axe d (11) comprend :

un moyen d'estimation de tension terminale (21) qui estime la tension terminale du moteur sur la base des valeurs de commande de tension (Vd*, Vq*) pour l'inverseur (4) ;

un moyen de fixation de limite supérieure de tension (22) qui fixe la valeur de limite supérieure de tension terminale (Vmax$_2$) de la tension de sortie de l'inverseur (4) ;

un moyen de fixation de valeur de courant d'entrée (23) qui fixe une valeur d'entrée provisoire (Idest) pour la commande de courant d'axe d (Id*) ;

un filtre passe-bas (25) ; et

un moyen de changement d'entrée (24) qui effectue une commande d'affaiblissement de champ en changeant une entrée vers le filtre passe-bas (25).

3. Appareil de commande pour un moteur synchrone de type à aimant permanent selon la revendication 2, **caractérisé en ce que** le dispositif de commande de courant d'axe d (11) limite l'augmentation de la tension terminale sur le moteur (6) en fixant une entrée vers le filtre passe-bas (25) à une valeur constante négative lorsque la valeur de commande de tension vers l'inverseur (4) dépasse la valeur de limite supérieure de tension terminale fixée sur la base de la tension de sortie maximale de l'inverseur (4), en fixant l'entrée à zéro lorsque la valeur de commande de tension vers l'inverseur (4) est égale ou inférieure à la valeur de limite supérieure de tension terminale, et en utilisant une sortie en provenance du filtre passe-bas (25) en tant que valeur de commande de courant d'axe d.

4. Appareil de commande pour un moteur synchrone de type à aimant permanent selon la revendication 1, **caractérisé en ce que** le dispositif de commande de courant d'axe d (11) comprend :

    un moyen d'estimation de tension terminale (21) qui estime la tension terminale du moteur sur la base des valeurs de commande de tension (Vd*, Vq*) pour l'inverseur (4) ;
    un moyen de fixation de limite supérieure de tension (22) que fixe la valeur de limite supérieure de tension terminale (Vmax$_2$) de la tension de sortie de l'inverseur (4) ;
    un moyen de fixation de valeur de courant d'entrée (23) qui fixe une valeur d'entrée provisoire (Idest) pour la commande de courant d'axe d (Id*) ;
    un filtre passe-bas (25) ; et
    un moyen de changement d'entrée (28) qui effectue une commande d'affaiblissement de champ en changeant une entrée vers le filtre passe-bas (25) ;
    un limiteur de courant (26) qui limite la valeur de commande de courant ; et
    un moyen de mise en oeuvre d'intégration (27) pour mettre en oeuvre une intégration dans le filtre passe-bas (25).

5. Appareil de commande pour un moteur synchrone de type à aimant permanent selon la revendication 4, **caractérisé en ce que** le dispositif de commande de courant d'axe d (11) fixe une entrée vers le filtre passe-bas (25) à une valeur constante négative lorsque la valeur de commande de tension pour l'inverseur (4) dépasse la valeur de limite supérieure de tension terminale (Vmax$_2$) fixée sur la base de la tension de sortie maximale de l'inverseur (4), fixe l'entrée à une valeur constante positive lorsque la valeur de commande de tension (Vd*, Vq*) pour l'inverseur (4) est égale ou inférieure à la valeur de limite supérieure de tension terminale (Vmax$_2$), utilise, en tant que valeur de commande de courant d'axe d (Vd*), une valeur obtenue en limitant une sortie provenant du filtre passe-bas (25) au moyen du limiteur de courant (26), et interdit la mise en oeuvre d'intégration du filtre passe-bas (25) lorsque la sortie du filtre passe-bas (25) est en dehors d'une plage dans laquelle la sortie est limitée par le limiteur de courant (26).

6. Appareil de commande pour un moteur synchrone de type à aimant permanent selon la revendication 3 ou 5, **caractérisé en ce que** la valeur de l'entrée dans le filtre passe-bas (25) et la fréquence de coupure du filtre passe-bas (25) sont rendues variables selon la valeur de commande de courant d'axe d (Vd*), l'état d'une charge sur le moteur (6) et la vitesse de rotation du moteur (6).

7. Appareil de commande pour un moteur synchrone de type à aimant permanent selon l'une quelconque des revendications 1 à 6, **caractérisé en ce que** la valeur de limite supérieure de tension terminale (Vmax$_2$) fixée sur la base de la tension de sortie maximale de l'inverseur (4) est rendue variable selon l'état d'une charge sur le moteur (6) et la vitesse de rotation du moteur (6).

## FIG. 1

EP 1 729 407 B1

# FIG. 2

EP 1 729 407 B1

# FIG. 3

## FIG. 4

## FIG. 5

d-AXIS CURRENT COMMANDER — 11

**21** TERMINAL VOLTAGE ESTIMATION MEANS
$$v_{a2} = \left(v_d^*\right)^2 + \left(v_q^*\right)^2$$

inputs: $v_d^*$, $v_q^*$

**22** VOLTAGE UPPER LIMIT SETTING MEANS → Vmax2

**23** INPUT CURRENT VALUE SETTING MEANS → Idcst

**28** INPUT CHANGE MEANS

```
if va2>Vmax2
   out=1
else
   out=-1
```

output: out → Va2

**25** LOW-PASS FILTER
$$\frac{1}{1+T_{fid}s}$$
→ $i_{din}^*$

**27** INTEGRATION OPERATION MEANS

**26** CURRENT LIMITER → $i_d^*$

**EP 1 729 407 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000278982 A
- JP 2001204199 A